# EUROPEAN PATENT SPECIFICATION

(11) **EP 2 595 283 B1**
(45) Date of publication and mention of the grant of the patent: **06.05.2020**
(21) Application number: 11190000.7
(22) Date of filing: 21.11.2011
(51) Int. Cl.: H02K 1/32, H02K 9/04, H02K 9/22

(54) **Heat transfer assembly for electric motor rotor**
Wärmeübertragungsanordnung für einen Elektromotorrotor
Ensemble de transfert de chaleur pour rotor de moteur électrique

(43) Date of publication of application: 22.05.2013
(73) Proprietor: Hamilton Sundstrand Corporation, Windsor Locks, CT 06096-1010 (US)
(72) Inventor: Telakowski, Robert, Fairlawn, NJ 07410 (US); Pal, Debrabrata, Hoffman Estates, IL Illinois 60195 (US)
(74) Representative: Dehns

(56) References cited:
- CN-A- 101 413 440
- DE-A1-102008 043 367
- JP-A- 8 243 878
- JP-U- H0 739 275
- JP-U- 59 129 355
- US-A1- 2008 265 699

## Description

### BACKGROUND

The present invention is directed generally to cooling systems for electric motors. More particularly, the present invention is directed to heat transfer assemblies for shaft and hub arrangements in motor rotors.

Electric motors typically comprise a stator element and a rotor element that interact electro-magnetically to convert electric power to mechanical power. For example, a conventional stator element comprises an annular housing having windings of copper coils circumferentially oriented. A conventional motor rotor element is mounted on a shaft. Electric current is passed through the stator windings to generate an electro-magnetic field that causes the rotor hub to rotate about the axis of the shaft. The electric current causes resistance heating of the coils, which heats the entire electric motor including the rotor. In particular, high power electric motors that operate at high speeds and are compact in size generate high heat densities.

Conventional schemes for cooling electric motors involve passing cooling fluid over the stator, which is typically easy to accomplish because of the stationary and exterior nature of the stator assembly. Rotors are typically cooled by passing cooling fluid between the stator and rotor. Such cooling schemes, however, often provide inadequate cooling for rotors used in high power motors due to high rotor heat density. In addition, as the size of high power motors decreases, the available area for passing cooing air between the stator and rotor also decreases. There is therefore a need to improve cooling efficiency in electric motor rotors.

JP59 129 355 4 discloses:
An electric motor (12) comprising:
a housing (18A, 18B);
a stator assembly (28) mounted within the housing (18A) and comprising a magneto-electro drive component;
a shaft (26A, 26B) extending axially through the stator assembly (28) and supported by the housing (18A);
a rotor assembly (30) mounted to the shaft (26A, 26B) and comprising a magneto-electric drive component;
a corrugated fin heat transfer structure (44) positioned within the shaft (26A, 26B) and configured to draw heat from the rotor assembly (30), comprising a sheet forming a plurality of radially extending loops (54) extending axially along the shaft, the plurality of radially extending loops (54) comprising a plurality of undulations having radially outer crests (58) and radially inner troughs (56).

### SUMMARY

A motor according to the invention comprises the features of claim 1.

### BRIEF DESCRIPTION OF THE DRAWINGS

FIG. 1 is a side cross-sectional view of a fan assembly having an electric motor in which a heat transfer assembly of the present invention is incorporated.
FIG. 2 shows a close-up view of the heat transfer assembly of FIG. 1 as installed in an electric motor rotor.
FIG. 3A is an end view of the electric motor rotor of FIG. 2 in which corrugated fins of the heat transfer assembly are shown extending in a true radial orientation.
FIG. 3B is an alternative end view of the electric motor rotor of FIG. 2 in which corrugated fins of the heat transfer assembly are shown extending in a radially offset orientation.
FIG. 4A is a perspective view of one embodiment of a corrugated sheet having ruffled fins that can be used as the corrugated fins of FIG. 3A or FIG. 3B.
FIG. 4B is a perspective view of another embodiment of a corrugated fin sheet having lanced fins that can be used as the corrugated fins of FIG. 3A or FIG. 3B.

### DETAILED DESCRIPTION

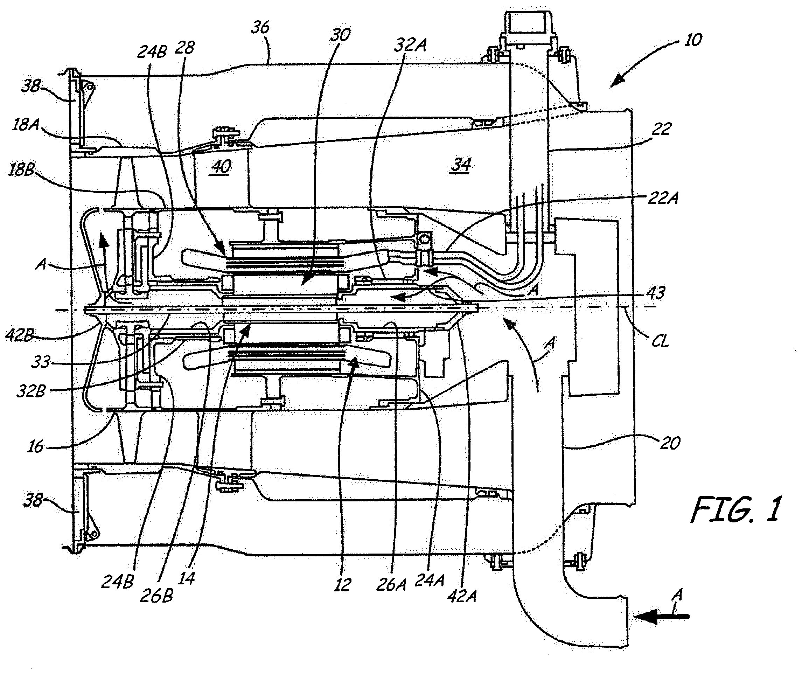

FIG. 1 is a side cross-sectional view of fan assembly 10 having electric motor 12 in which heat transfer assembly 14 of the present invention is incorporated. Fan assembly 10 includes fan impeller 16, outer housing 18A, inner housing 18B, air tube 20, electrical conduit 22 and motor supports 24A and 24B. Electric motor 12 includes shafts 26A and 26B, stator 28 and motor rotor 30. Shaft 26A is mounted to motor support 24A within housing 18B by bearing assembly 32A and tie rod 33. Shaft 26B is mounted to motor support 24B within housing 18B by bearing assembly 32B. Outer housing 18A comprises an annular duct in which fan impeller 16 is disposed to drive air through duct 34 around inner housing 18B. Bypass duct 36 is mounted to the exterior of outer housing 18A. Bypass duct 36, in conjunction with bypass valve 38, permits air to bypass fan impeller 16. Bypass duct 36, outer housing 18A and inner housing 18B extend generally axially and concentrically along centreline CL. Electrical conduit 22 allows access through housing 18A and housing 18B to stator 28 for connection of electric power. Air tube 20 allows air A from an outside source to access heat transfer assembly 14 to provide cooling of electric motor 12. Fan assembly 10 is configured for use in a ram air duct for an aircraft, but can be used in other applications. Similarly, electric motor 12 is configured for use in fan assembly 10, but can be used to drive other types of systems.

Inner housing 18B is concentrically mounted within outer housing 18A by support structure such as guide vanes 40. Motor supports 24A and 24B are mounted to a radially inward facing surface of inner housing 18B and include portions for supporting stator 28 and bearing assemblies 32A and 32B. Stator 28 and bearing assemblies 32A and 32B are mounted to radially inward facing surfaces of motor supports 24A and 24B. Shaft 26A and shaft 26B are positioned within bearing assemblies 32A and 32B and extend axially and concentrically with centreline CL. Tie rod 33 extends through shafts 26A and 26B from first end cap 42A to second end cap 42B. End cap 42B connects fan impeller 16 to shafts 26A and 26B. Motor rotor 30 is mounted to a radially outward facing surface of shaft 26A to face toward stator 28. A small gap is provided between motor rotor 30 and stator 28 to permit cooling air A from air tube 20 to flow through electric motor 12. Electrical wiring 22A extends through electrical conduit 22 and connects to stator 28 to energize coil windings with electrical current. The energized coil windings exert an electro-magnetic flux field on motor rotor 30. The flux field causes motor rotor 30 to rotate about central axis CL on shaft 26A. Tie rod 33 rotates with shafts 26A and 26B and motor rotor 30. Shafts 26A and 26B and motor rotor 30 rotate on bearing assemblies 32A and 32B and cause fan impeller 16 to rotate in duct 34, pushing air between housings 18A and 18B.

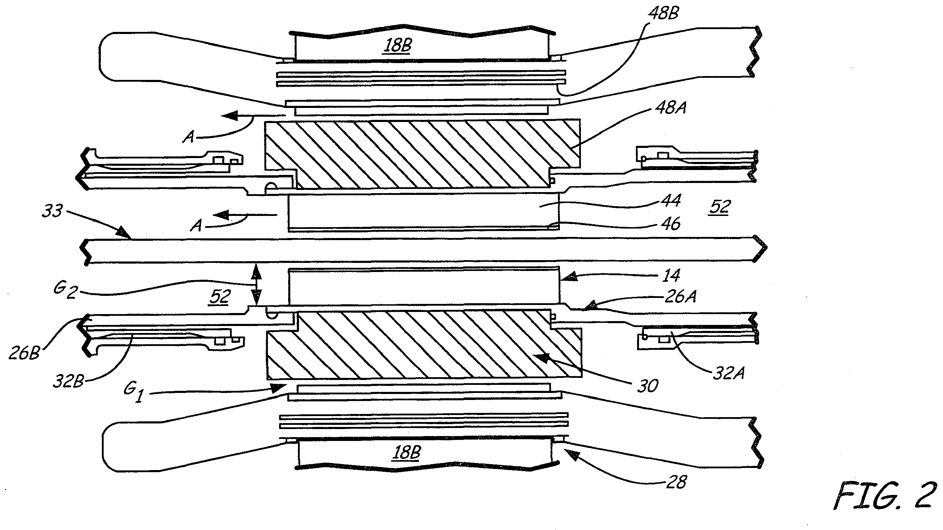

The electric current provided to stator 28 generates heat within electric motor 12. Cooling air A flows around the outer surface of stator 28 within housing 18B. Cooling air A also flows along the inner surface of stator 28 and the outer surface of motor rotor 30 in the gap between such components. Cooling air A is also permitted to enter shaft 26A and shaft 26B through opening 43 that permits flow along the interior of motor rotor 30. Heat transfer assembly 14 of the present invention improves the removal of heat from motor rotor 30. Heat transfer assembly 14 comprises a corrugated fin sheet attached to the interior of shaft 26A, as is discussed in greater detail with respect to FIG. 2.

FIG. 2 shows a close-up view of heat transfer assembly 14 of FIG. 1 as installed in motor rotor 30 of electric motor 12. Electric motor 12 includes shafts 26A and 26B, stator 28, motor rotor 30, bearing assemblies 32A and 32B and tie rod 33. Heat transfer assembly 14 includes fin structure 44 and liner 46. Motor 28 includes rotor component 48A and stator 28 includes magneto-electric drive component 48B. In the disclosed embodiment, rotor component 48A comprises magnetically permeable material and magneto-electric drive component 48B comprises coil windings, as is known in the art to form an induction motor. In other embodiments, rotor component 48A and magneto-electric drive component 48B can be configured to form a permanent magnet motor or a switched reluctance motor, as are known in the art.

As discussed with reference to FIG. 1, shafts 26A and 26B are configured to rotate on bearing assemblies 32A and 32B, which are supported within housing 18B by motor supports 24A and 24B (FIG. 1). Motor rotor 30 is mounted to a radially outer surface of shaft 26A to oppose stator 28, which is mounted to a radially inner surface of housing 18B on pedestals 50. Gap G1 is provided between stator 28 and motor rotor 30 to permit rotation of motor rotor 30. Gap G1 also allows air A to pass along stator 28 and motor rotor 30 to provide convective cooling. Air A is also permitted into shaft 26A to provide additional convective cooling of heat transfer assembly 14.

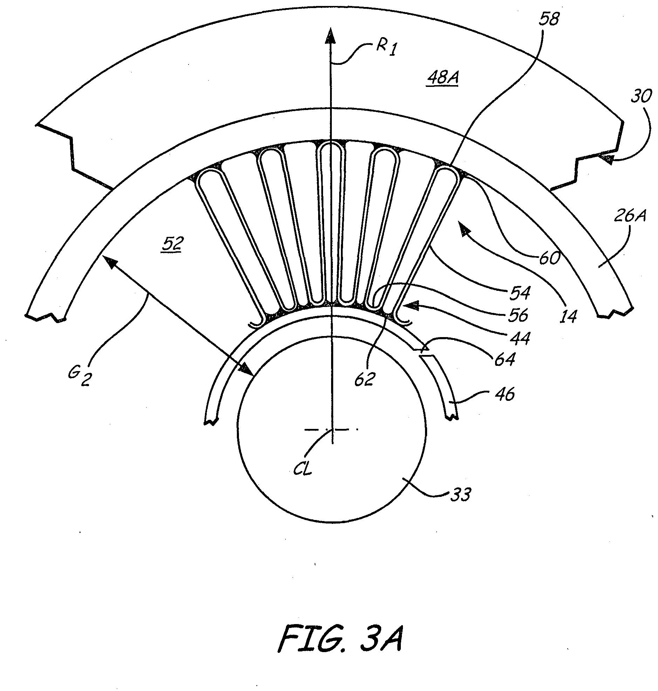

Shafts 26A and 26B comprise annular bodies having internal passage 52 that extends axial along centreline CL. Tie rod 33 extends through passage 52 concentrically with shafts 26A and 26B along centreline CL. The diameter of tie rod 33 is smaller than that of passage 52 such that gap G2 is present between tie rod 33 and shafts 26A and 26B, which permits air A to pass through passage 52. Fin structure 44 of heat transfer assembly 14 is positioned within passage 52 to increase the cooling effectiveness of air A. Fin structure 44 comprises a corrugated fin sheet wrapped into an annular ring. The outer diameter end of fin structure 44 is affixed to shaft 26A adjacent to rotor component 48A of motor rotor 30. Liner 46 is affixed to the inner diameter end of fin structure 44. Heat generated by operation of electric motor 12 accumulates in rotor component 48A. Fin structure 44 pulls heat out of rotor component 48A through conduction. Air A removes heat from fin structure 44 through convection. As shown in FIG. 1, air A continues through shaft 26B and out of end cap 42B to pass into duct 34 and out of fan assembly 10. As discussed with reference to FIGS. 3A - 4B, fin structure 44 is configured to maximize convective and conductive heat transfer between shaft 26A and air A.

FIG. 3A is an end view of electric motor rotor 30 of FIG. 2 in which fin structure 44 of heat transfer assembly 14 is shown extending in a true radial orientation. Tie rod 33 comprises a cylindrical body that extends axially along centreline CL. Shaft 26A comprises an annular structure that extends axially along centreline CL concentric with tie rod 33. Gap G2 extends between tie rod 33 and shaft 26A. Rotor component 48A of motor rotor 30 is mounted to the exterior of shaft 26A. In one embodiment, shaft 26A is force fit into motor rotor 30. Fin structure 44 of heat transfer assembly 14 is mounted to the interior of shaft 26A and occupies a substantial portion of the height of gap G2. Liner 46 of heat transfer assembly 14 is mounted to the interior of fin structure 44. A small gap is maintained between tie rod 33 and liner 46 to facilitate assembly of heat transfer assembly 14 and to prevent engagement of or otherwise interfering with tie rod 33.

Fin structure 44 of heat transfer assembly 14 comprises a corrugated fin sheet that forms a plurality of loops 54 having troughs 56 and crests 58. Crests 58 form the radial outer ends of loops 54 and are metallurgically attached to shaft 26A at joints 60. Troughs 56 form the radial inner ends of loops 54 and are metallurgically attached to liner 46 at joints 62. In one embodiment, shaft 26A and liner 46 are comprised of steel or a steel alloy and fin structure 44 is comprised of nickel or a nickel alloy. In such an embodiment fin structure 44 is brazed to shaft 26A and liner 46.

In other embodiments, fin structure 44 is comprised of aluminium or an aluminium alloy. In such an embodiment, an outer diameter liner would be provided at crests 58 to facilitate attachment. Specifically, the outer diameter liner and liner 46 would also be comprised of aluminium to facilitate brazing. The outer diameter liner would then be force fit into shaft 26A to accommodate differences in thermal expansion between shaft 26A, which is steel, and the aluminium heat transfer assembly. In such an embodiment, however, the advantages of having thermally conductive aluminium fins would have to be balanced with the lack of a metallurgical connection between the fins and shaft 26A.

Liner 46 provides structural support to loop 54. Liner 46 includes split 64, which allows the diameter of liner 46 to adjust to facilitate insertion of heat transfer assembly 14 into shaft 26A during initial fit-up and assembly. Split 64, in one embodiment, extends through liner 46 in a spiral or helical fashion with respect to centreline CL. Split 64 also provides liner 46 with spring-like action when liner 46 is compressed during assembly such that liner 46 applies radially outward force to fin structure 44. The spring force maintains fin structure 44 in contact with shaft 26A, which expedites production of joints 60 and 62.

Rotor component 48A generates heat during operation of electric motor 12. The heat passes conductively into shaft 26A, fin structure 44 and liner 46. Metallurgical joints 60 and 62 provide highly conductive joints for efficient transfer of heat. Air A travels through passage 52 to remove heat originating from motor rotor 30. Fin structure 44 increases the surface with which cooling air A interacts. Loops 54 of fin structure 44 are thin such that numerous loops 54 can be densely packed within passage 52. In particular, the height of each loop 54 is many times greater than the thickness of the corrugated fin sheet comprising fin structure 44. This permits the density of loops 54 within passage 52 to be increased. The number of loops is at maximum density when sidewalls of adjacent loops 54 are touching at the interface with liner 46. The loops provide a significant increase in surface area over other types of heat transfer mechanisms, such as sleeves having annular base portions and thick radial fins and slots as is described in U.S. Pat. No. 7,791,238. The increase in surface area provided by loops 54, however, does not unduly interfere with flow of air A through passage 52. Specifically, the thin nature of loops 54 does not obstruct passage 52 such that air A does not experience a large pressure drop. The number of loops 54 provided by fin structure 44 can be adjusted based on design needs. In one embodiment, a total of fifty four loops with heights of approximately 0.5 inches (= 1.27 cm) are provided from a corrugated sheet having a thickness of 0.008 inches (≈ 0.203 mm). Such a fin structure is used in a motor having a shaft inner diameter of approximately 1.48 inches (= 3.76 cm) and a liner outer diameter of approximately 0.48 inches (≈ 1.22 cm).

In the embodiment shown, loops 54 extend from liner 46 to shaft 26A in a true radial direction with respect to centreline CL. For example, the position halfway between two adjacent troughs 56 is radially aligned with the centre of a single crest 58, as shown by radius R1. In such a configuration, troughs 56 are adjacent each other and crests 58 are spaced apart from each other such that loops 54 spread out in a fan-like pattern. Loops 54 that extend in a true radial direction provide rotational balance to motor rotor 30. In other embodiments, however, loops 54 may be adjusted to increase mechanical and thermal properties of heat transfer assembly 14.

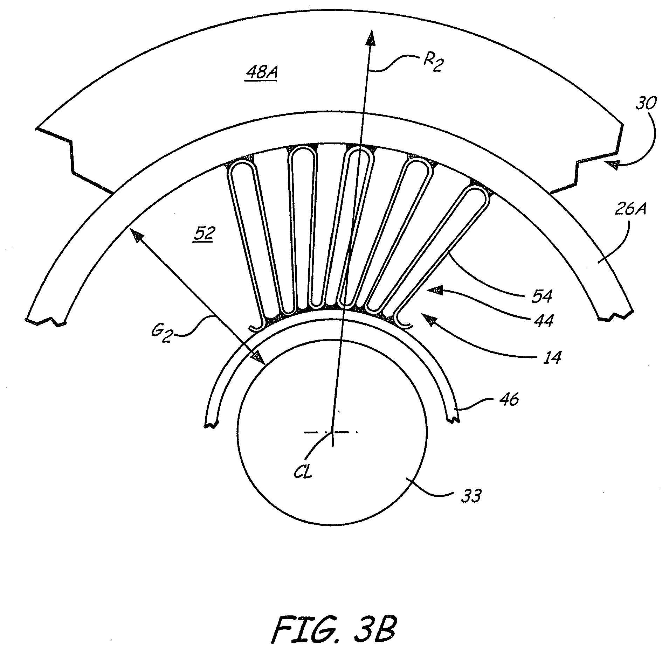

FIG. 3B is an end view of an alternative electric motor rotor 30 of FIG. 2 in which fin structure 44 of heat transfer assembly 14 is shown extending in a radially offset orientation. As can be seen in FIG. 3B, in one embodiment, loops 54 are offset in a clockwise direction. For example, the centre of each trough 56 is radially aligned with the centre of an adjacent crest 58, as shown by radius R2. As such, crests 58 are offset by a only few degrees as compared to FIG. 3A. The exact amount, however, can vary based on design needs. Radially offset loops 54 allows fin structure 44 to compress or otherwise flex to absorb thermal expansions with heat transfer assembly 14. For example, shaft 26A and liner 46 may thermally grow in the radial direction, but at different rates. As liner 46 grows toward shaft 26A, loops 54 become further offset to permit relative movement between shaft 26A and liner 46.

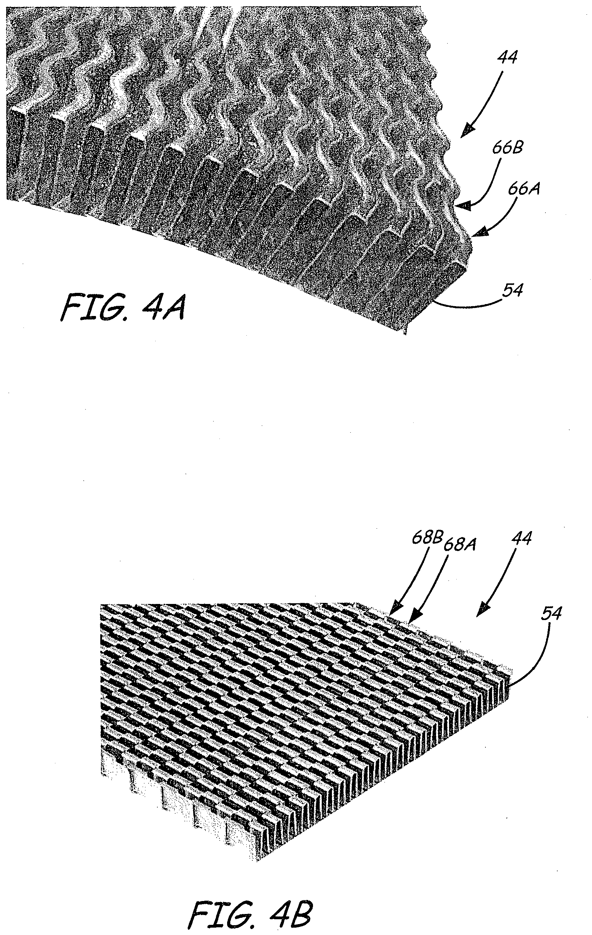

Fin structure 44 comprises a sheet of material that is corrugated to form fins. Each fin is formed of a pair of sides and a crest 58 from a loop 54 and is disposed between two troughs 56. Such materials are commonly used in conventional air-cooled heat exchangers. The present invention utilizes such materials in a rolled configuration to form annular fin structure 44. As shown in FIGS. 3A and 3B, loops 54 of fin structure 44 extend axially along centreline CL such that straight cooling passages are formed. In other embodiments, however, loops 54 can vary in the axial direction to provide other cooling or fluid flow performance improvements, as shown in FIGS. 4A and 4B.

FIG. 4A is a perspective view of one embodiment of fin structure 44 that can be used as loops 54 of FIG. 3A or FIG. 3B. In the embodiment of FIG. 4A, loops 54 comprise ruffled fins, as are known in the art. As loops 54 extend in the axial direction along centreline CL, the sides of loops 54 undulate in a wave-like pattern. Undulations 66A and 66B alternately extend the sides of loops 54 passed opposite sides of a central axis of loops 54 extending parallel to centreline CL. The undulations increase the overall surface area and heat transfer film coefficient of fin structure 44, thereby improving heat transfer.

FIG. 4B is a perspective view of another embodiment of fin structure 44 that can be used as loops 54 of FIG. 3A or FIG. 3B. In the embodiment of FIG. 4B, loops 54 comprise lanced fins, as are known in the art. Loops 54 comprise rows 68A and 68B of circumferentially offset loops. Thus, a central axis of loops 54 of rows 68A aligns with a side wall of loops 54 of rows 68B. In such a configuration, loops 54 are ninety degrees out of phase with respect to troughs 56 and crests 58 of FIG. 3A, although other amounts of circumferential offset can be used. Offset rows 68A and 68B break up the flow of air A, thereby improving heat transfer. Lanced fins, however, have higher heat transfer capability for a given pressure drop, but can be difficult to roll into an annulus for small diameter rotors.

The present invention provides improved cooling of all types of electric motors. In particular, motors in which air travels through a narrow passage alongside a rotor will experience improved cooling by the use of heat transfer assembly 14. Loops 54 of fin structure 44 provide increased wetted surface area for interacting with cooling air. Loops 54 improve conduction of heat from the motor rotor to the narrow passage where the cooling air flows. The large surface area of loops 54 allows the cooling air to more effectively remove heat via convection. The improved cooling of the motor allows for higher power densities, which reduces size and weight. Alternatively, operation of motors at cooler temperatures improves efficiency and extends operating life and reliability.

## Claims

1. An electric motor (12) comprising:
a housing (18A, 18B);
a stator assembly (28) mounted within the housing (18A) and comprising a magneto-electro drive component;
a shaft (26A, 26B) extending axially through the stator assembly (28) and supported by the housing (18A);
a rotor assembly (30) mounted to the shaft (26A, 26B) and comprising a magneto-electric drive component;
a corrugated fin heat transfer structure (44) positioned within the shaft (26A, 26B) and configured to draw heat from the rotor assembly (30), comprising a sheet forming a plurality of radially extending loops (54) extending axially along the shaft, the plurality of radially extending loops (54) comprising a plurality of undulations having radially outer crests (58) and radially inner troughs (56);
a liner (46) metallurgically attached to the troughs (56) at joints (62); and
a tie rod (33) extending through the shaft (26A, 26B) from a first end cap (42A) to a second end cap (42B), the tie rod passing through the corrugated fin heat transfer structure (44) and being supported by the first and second end caps (42A, 42B)

2. The motor of claim 1 wherein the radially outer crests (58) are spaced apart from each other.

3. The motor of claim 1 or claim 2 wherein the radially inner troughs (56) are adjacent each other.

4. The motor of any preceding claim, wherein the plurality of radially extending loops (54) extend from the troughs (56) to the crests (58) in a direction offset from a true radial direction.

5. The motor of any preceding claim, wherein the shaft (26A, 26B) is comprised of a first thermally conductive material and the corrugated fin heat transfer structure (44) is comprised of a second different material.

6. The motor of any preceding claim, wherein the plurality of radially extending loops (54) of the sheet are brazed to the rotor (30).

7. The motor of any preceding claim, wherein the plurality of radially extending loops (54) of the sheet comprise a ruffled fin sheet rolled into an annular structure, wherein the plurality of loops (54) extend in a wave pattern in a direction parallel to the axis of the shaft.

8. The motor of any preceding claim, wherein the plurality of radially extending loops (54) of the sheet comprise a lanced fin sheet rolled into an annular structure, wherein the plurality of loops (54) include axially adjacent sections that are offset from each other in a circumferential direction.

9. The motor of any preceding claim, wherein said housing (18A, 18B) comprises an outer housing (18A) and an inner housing (18B) concentrically mounted within the outer housing (18A), the outer housing and the inner housing defining an annular duct (34), and a fan impeller (16) is disposed within the outer housing (18A) and connected to the shaft (26A, 26B) to drive air through the annular duct (34) and around the inner housing (18B),
wherein the stator assembly (28) is mounted to radially inward facing surfaces of motor supports (24A, 24B), which in turn are mounted to a radially inward facing surface of the inner housing (18B), and the inner and outer housings (18A, 18B) are connected by vanes (40) extending from the inner housing (18B) to the outer housing (18A).

10. A motor driven assembly, including a motor as claimed in any preceding claim.

## Patentansprüche

1. Elektromotor (12), umfassend:
ein Gehäuse (18A, 18B);
eine Statoranordnung (28), die in dem Gehäuse (18A) montiert ist und umfassend eine elektromagnetische Antriebskomponente;
eine Welle (26A, 26B), die sich axial durch die Statoranordnung (28) erstreckt und von dem Gehäuse (18A) gestützt wird;
eine Rotoranordnung (30), die an der Welle (26A, 26B) montiert ist und eine elektromagnetische Antriebskomponente umfasst;
eine Wellrippenwärmeübertragungsstruktur (44), die in der Welle (26A, 26B) positioniert und konfiguriert ist, um Wärme aus der Rotoranordnung (30) zu ziehen, umfassend ein Blech, das eine Vielzahl von sich radial erstreckenden Schlaufen (54) bildet, die sich entlang der Welle axial erstrecken, wobei die Vielzahl von sich radial erstreckenden Schlaufen (54) eine Vielzahl von Wellungen umfasst, die radial äußere Wellenberge (58) und radial innere Wellentäler (56) aufweisen;
einen Mantel (46), der an Verbindungsstellen (62) metallurgisch an den Wellentälern (56) angebracht ist; und
eine Zugstange (33), die sich durch die Welle (26A, 26B) von einer ersten Endkappe (42A) zu einer zweiten Endkappe (42B) erstreckt, wobei die Zugstange durch die Wellrippenwärmeübertragungsstruktur (44) hindurchgeht und von der ersten und zweiten Endkappe (42A, 42B) gestützt wird.

2. Motor nach Anspruch 1, wobei die radial äußeren Wellenberge (58) voneinander beabstandet sind.

3. Motor nach Anspruch 1 oder 2, wobei die radial inneren Wellenberge (56) aneinander angrenzen.

4. Motor nach einem der vorhergehenden Ansprüche, wobei sich die Vielzahl von sich radial erstreckenden Schlaufen (54) von den Wellentälern (56) zu den Wellenbergen (58) in einer Richtung erstreckt, die von einer eigentlichen radialen Richtung versetzt ist.

5. Motor nach einem der vorhergehenden Ansprüche, wobei die Welle (26A, 26B) aus einem ersten wärmeleitenden Material besteht und die Wellrippenwärmeübertragungsstruktur (44) aus einem zweiten anderen Material besteht.

6. Motor nach einem der vorhergehenden Ansprüche, wobei die Vielzahl von sich radial erstreckenden Schlaufen (54) des Blechs an dem Rotor (30) verlötet ist.

7. Motor nach einem der vorhergehenden Ansprüche, wobei die Vielzahl von sich radial erstreckenden Schlaufen (54) des Blechs ein gekräuseltes Rippenblech umfasst, das zu einer ringförmigen Struktur aufgerollt ist, wobei sich die Vielzahl von Schlaufen (54) in einem Wellenmuster in einer Richtung parallel zu der Achse der Welle erstreckt.

8. Motor nach einem der vorhergehenden Ansprüche, wobei die Vielzahl von sich radial erstreckenden Schlaufen (54) des Blechs ein gestanztes Rippenblech umfasst, das zu einer ringförmigen Struktur aufgerollt ist, wobei die Vielzahl von Schlaufen (54) axial nebeneinanderliegende Abschnitte einschließt, die voneinander in einer Umfangsrichtung versetzt sind.

9. Motor nach einem der vorhergehenden Ansprüche, wobei das Gehäuse (18A, 18B) ein Außengehäuse (18A) und ein Innengehäuse (18B) umfasst, das konzentrisch in dem Außengehäuse (18A) montiert ist, das Außengehäuse und das Innengehäuse einen ringförmigen Kanal (34) definieren, und ein Lüfterrad (16) in dem Außengehäuse (18A) angeordnet und mit der Welle (26A, 26B) verbunden ist, um Luft durch den ringförmigen Kanal (34) und um das Innengehäuse (18B) zu treiben,
wobei die Statoranordnung (28) an radial nach innen zeigenden Flächen von Motorträgern (24A, 24B) montiert ist, die wiederum an einer radial nach innen zeigenden Fläche des Innengehäuses (18B) montiert sind, und das Innen- und Außengehäuse (18A, 18B) durch Schaufeln (40) verbunden sind, die sich von dem Innengehäuse (18B) zu dem Außengehäuse (18A) erstrecken.

10. Motorbetriebene Anordnung, einschließend einen Motor nach einem der vorhergehenden Ansprüche.

## Revendications

1. Moteur électrique (12) comprenant :
un boîtier (18A, 18B) ;
un ensemble de stator (28) monté dans le boîtier (18A) et comprenant un composant d'entraînement magnéto-électrique ;
un arbre (26A, 26B) s'étendant axialement au travers de l'ensemble de stator (28) et supporté par le boîtier (18A) ;
un ensemble de rotor (30) monté sur l'arbre (26A, 26B) et comprenant un composant d'entraînement magnéto-électrique ;
une structure de transfert de chaleur à ailette ondulée (44) positionnée dans l'arbre (26A, 26B) et configurée pour extraire de la chaleur de l'ensemble de rotor (30), comprenant une feuille formant une pluralité de boucles s'étendant radialement (54) s'étendant axialement le long de l'arbre, la pluralité de boucles s'étendant radialement (54) comprenant une pluralité d'ondulations présentant des crêtes radialement extérieures (58) et des creux radialement intérieurs (56) ;
un revêtement (46) attaché de façon métallurgique aux creux (56) au niveau de joints (62) ; et
une barre de liaison (33) s'étendant au travers de l'arbre (26A, 26B) d'un premier bouchon (42A) à un second bouchon (42B), la barre de liaison passant au travers de la structure de transfert de chaleur à ailette ondulée (44) et étant supportée par les premier et second bouchons (42A, 42B).

2. Moteur selon la revendication 1, dans lequel les crêtes radialement extérieures (58) sont espacées les unes des autres.

3. Moteur selon la revendication 1 ou la revendication 2, dans lequel les creux radialement intérieurs (56) sont adjacents les uns aux autres.

4. Moteur selon une quelconque revendication précédente, dans lequel la pluralité de boucles s'étendant radialement (54) s'étend des creux (56) aux crêtes (58) dans une direction en déport d'une direction radiale réelle.

5. Moteur selon une quelconque revendication précédente, dans lequel l'arbre (26A, 26B) est constitué d'un premier matériau thermoconducteur et la structure de transfert de chaleur à ailette ondulée (44) est constituée d'un second matériau différent.

6. Moteur selon une quelconque revendication précédente, dans lequel la pluralité de boucles s'étendant radialement (54) de la feuille est brasée au rotor (30).

7. Moteur selon une quelconque revendication précédente, dans lequel la pluralité de boucles s'étendant radialement (54) de la feuille comprend une feuille à ailette froncée enroulée dans une structure annulaire, dans lequel la pluralité de boucles (54) s'étend dans un motif ondulé dans une direction parallèle à l'axe de l'arbre.

8. Moteur selon une quelconque revendication précédente, dans lequel la pluralité de boucles s'étendant radialement (54) de la feuille comprend une feuille à ailette incisée enroulée dans une structure annulaire, dans lequel la pluralité de boucles (54) inclut des sections axialement adjacentes qui sont en déport les unes des autres dans une direction circonférentielle.

9. Moteur selon une quelconque revendication précédente, dans lequel ledit boîtier (18A, 18B) comprend un boîtier extérieur (18A) et un boîtier intérieur (18B) monté concentriquement dans le boîtier extérieur (18A), le boîtier extérieur et le boîtier intérieur définissant un conduit annulaire (34), et une roue de ventilateur (16) est disposée dans le boîtier extérieur (18A) et raccordée à l'arbre (26A, 26B) pour entraîner de l'air au travers du conduit annulaire (34) et autour du boîtier intérieur (18B),
dans lequel l'ensemble de stator (28) est monté sur des surfaces tournées vers l'intérieur radialement de supports de moteur (24A, 24B) qui sont à leur tour montés sur une surface tournée vers l'avant radialement du boîtier intérieur (18B), et les boîtiers intérieur et extérieur (18A, 18B) sont raccordés par des pales (40) s'étendant du boîtier intérieur (18B) au boîtier extérieur (18A).

10. Ensemble entraîné par moteur incluant un moteur selon une quelconque revendication précédente.
